(19) Europäisches Patentamt
European Patent Office
Office européen des brevets

(11) EP 3 115 569 A1

(12) EUROPÄISCHE PATENTANMELDUNG

(43) Veröffentlichungstag:
11.01.2017 Patentblatt 2017/02

(51) Int Cl.:
F01N 9/00 (2006.01)          F01N 5/04 (2006.01)
F02D 41/14 (2006.01)         F02B 39/10 (2006.01)
F02D 41/00 (2006.01)

(21) Anmeldenummer: 16176361.0

(22) Anmeldetag: 27.06.2016

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA MD

(30) Priorität: 08.07.2015 DE 102015212783

(71) Anmelder: Volkswagen Aktiengesellschaft
38440 Wolfsburg (DE)

(72) Erfinder:
• Jeschke, Jens
  38106 Braunschweig (DE)
• Cassebaum, Oliver
  38448 Wolfsburg (DE)

(74) Vertreter: MFG Patentanwälte
Meyer-Wildhagen Meggle-Freund
Gerhard PartG mbB
Amalienstraße 62
80799 München (DE)

(54) VERFAHREN ZUM BESTIMMUNG EINER GASEIGENSCHAFT EINES GASES EINER VERBRENNUNGSMASCHINE UND ENTSPRECHENDE MOTORSTEUERUNG

(57) Bereitgestellt wird ein Verfahren zum Bestimmen einer Gaseigenschaft (37) eines Gases (19,20,29) einer Verbrennungskraftmaschine (5), wobei das Verfahren folgende Schritte aufweist: Zuführen des Gases (19) in eine Elektromaschine (21); Bestimmen einer elektrischen Leistung ($P_{elektr}$) der Elektromaschine (21); und Bestimmen der Gaseigenschaft (T, 37) basierend auf der bestimmten elektrischen Leistung ($P_{elektr}$).

FIG. 1

EP 3 115 569 A1

**Beschreibung**

Die vorliegende Erfindung betrifft ein Verfahren zum Bestimmen einer Gaseigenschaft, insbesondere Abgaseigenschaft, eines Gases einer Verbrennungskraftmaschine, ein Verfahren zum Steuern einer Verbrennungskraftmaschine gemäß der bestimmten Abgaseigenschaft des Abgases sowie ein Motorsteuergerät, welches zum Durchführen eines der Verfahren ausgebildet ist.

Zur Steuerung einer Verbrennungskraftmaschine (VKM), wie etwa Ottomotor oder Dieselmotor, kann eine Bestimmung einer Temperatur eines Abgases nützlich sein. Insbesondere kann aufgrund einer Abgastemperatur ein Turbolader, insbesondere VTG-Turbolader, vorgesteuert werden. Während des Betriebs der VKM kann sich eine Temperatur des Abgases schnell ändern. Zur Bestimmung einer Abgastemperatur sind dabei Temperatursensoren aufgrund ihrer Trägheit nicht immer optimal geeignet.

Für eine Bestimmung von Abgastemperaturen, welche sich insbesondere schnell ändern, kann ein verbesserter (schneller ansprechender) jedoch teurerer Temperatursensor verwendet werden. Weiterhin kann eine schnelle Bestimmung der Abgastemperatur auf Basis von Brennrauminformationen (zum Beispiel: Wärmemenge, Verbrennungsmotorwirkungsgrad, Massenstrom) durchgeführt werden. Falls ein Abgasturbolader vorhanden ist, kann eine Bestimmung der Abgastemperatur auch auf der Basis einer Turbinendrehzahl durchgeführt werden.

Die US 2007/0151240 A1 offenbart eine Temperaturbestimmungstechnik für einen Turbolader, wobei eine Steuerung ein Steuerungssignal bestimmt, welches eine Turbinenauslasstemperatur als eine Funktion von Druckmessungen entlang eines Gasflusspfades angibt.

Die herkömmlichen Verfahren zum Bestimmen einer Abgastemperatur sind jedoch entweder mit erhöhtem Ausrüstungsaufwand oder erhöhten Kosten verbunden oder sind nicht in allen Situationen hinreichend genau. Insbesondere sind herkömmliche Sensoren meist entweder zu träge und/oder zu ungenau. Dies kann auch für die Bestimmung anderer Abgaseigenschaften (insbesondere physikalische/chemische oder thermodynamische Abgaseigenschaft) gelten.

Eine Aufgabe der vorliegenden Erfindung ist es somit, ein Verfahren zum Bestimmen einer Abgaseigenschaft eines Abgases einer Verbrennungskraftmaschine vorzuschlagen, welches eine zuverlässige und schnelle Bestimmung einer Eigenschaft des Abgases ermöglicht, ohne aufwändige Nachrüstungen zu erfordern. Ferner ist es eine Aufgabe der vorliegenden Erfindung, ein Verfahren zum Steuern einer Verbrennungskraftmaschine bereitzustellen, welches ermöglicht, die Verbrennungskraftmaschine in zuverlässiger Weise mit einfacheren Mitteln zu steuern. Ferner ist es eine Aufgabe der vorliegenden Erfindung, ein Motorsteuergerät bereitzustellen, welches eines der Verfahren ausführen kann.

Die Aufgabe wird durch ein Verfahren zum Bestimmen einer Abgaseigenschaft eines Abgases einer Verbrennungskraftmaschine, durch ein Verfahren zum Steuern einer Verbrennungskraftmaschine und durch ein Motorsteuergerät gemäß den unabhängigen Ansprüchen gelöst. Die abhängigen Ansprüche betreffen weitere Ausführungsformen der vorliegenden Erfindung.

Gemäß einem ersten Aspekt der vorliegenden Erfindung ist ein Verfahren zum Bestimmen einer Gaseigenschaft eines Gases einer Verbrennungskraftmaschine bereitgestellt, wobei das Verfahren aufweist:

Zuführen des Gases in eine Elektromaschine;
Bestimmen einer elektrischen Leistung der Elektromaschine; und
Bestimmen der Gaseigenschaft basierend auf der bestimmten elektrischen Leistung.

Die Elektromaschine kann einen elektrisch betriebenen Verdichter (z.B. zum Verdichten von Luft, die der Verbrennungsmaschine zugeführt wird) oder einen mit einer Turbine gekoppelten elektrischen Generator (der z.B. von Abgas der Verbrennungsmaschine angetrieben wird) umfassen. Die elektrische Leistung kann von der Elektromaschine verbraucht oder erzeugt werden.

Gemäß einer Abwandlung des ersten Aspekts der vorliegenden Erfindung ist ein Verfahren zum Bestimmen einer Abgaseigenschaft eines Abgases einer Verbrennungskraftmaschine bereitgestellt. Dabei weist das Verfahren auf:

Zuführen des Abgases in eine Generatorbaugruppe;
Bestimmen einer elektrischen Leistung der Generatorbaugruppe; und
Bestimmen der Abgaseigenschaft basierend auf der bestimmten elektrischen Leistung.

Das Verfahren kann zum Beispiel durch ein (Software und/oder Hardware)-Modul (zum Beispiel Unterprozedur, Unterprogramm oder speziell ausgelegter Chip) eines Motorsteuergeräts, insbesondere während eines Betriebs eines Fahrzeuges mit VKM, welche das Motorsteuergerät umfasst, durchgeführt werden. Die Abgaseigenschaft kann insbesondere eine thermodynamische Eigenschaft des Abgases umfassen. Das Abgas kann nach bzw. während einer Verbrennung (Reaktion von Luftsauerstoff und Kraftstoff) von Kraftstoff (zum Beispiel Diesel oder Benzin) innerhalb eines Verbrennungsraumes (zum Beispiel Zylinder) der Verbrennungskraftmaschine entstehen und nach erfolgter Verbrennung aus dem Verbrennungsraum entlassen werden (zum Beispiel über ein Auslassventil). Über ein Rohrsystem kann das Abgas in die Generatorbaugruppe geleitet werden.

Die Generatorbaugruppe kann zum Beispiel eine Turbine bzw. Strömungsmaschine mit mechanischer Verbindung zu einem elektromotorischen Antrieb umfassen, welche durch das zugeführte Abgas angetrieben wird. Das zugeführte Abgas kann zum Beispiel eine hohe Temperatur und einen hohen Druck aufweisen, um die Turbine der Generatorbaugruppe anzutreiben. Dazu kann die Turbine eine Mehrzahl von Schaufeln aufweisen, welche an einer Turbinenwelle angebracht sind, welche aufgrund der Wirkung des Abgasstroms (Auftreffen von Abgasteilchen) auf die Turbinenschaufeln in Rotation versetzt wird. Die Turbinenwelle kann in eine Rotorwelle eines Generators übergehen bzw. mit dieser gekoppelt sein. Der Rotor des Generators kann eine Magnetfeld-erzeugende Vorrichtung, zum Beispiel Permanentmagnete, umfassen. Der Generator kann ferner einen Stator mit Leitern aufweisen, welche um den Stator gelegt bzw. gewickelt sind. Durch die Rotation des Rotors mit der Magnetfeld-erzeugenden Vorrichtung relativ zu dem Stator können in den Leitern des Stators elektrische Spannungen induziert werden. Damit kann eine im Abgas enthaltene Enthalpie (bzw. thermische Energie) in der Strömungsmaschine in mechanische Rotationsenergie der Welle transformiert werden und diese in elektrische Energie umgewandelt werden, in eine elektrische Energie umgewandelt werden. Mit der erzeugten elektrischen Energie kann zum Beispiel in einem normalen Betrieb ein Elektromotor zum Beispiel eines Hybridfahrzeuges angetrieben werden und/oder auch eine Batterie eines Fahrzeugs geladen werden und/oder andere elektrische Verbraucher mit elektrischer Energie versorgt werden.

Die Generatorbaugruppe kann aufgrund des Zuführens des Abgases elektrische Leistung erzeugen, welche an Ausgangsanschlüssen (zum Beispiel zweipolig, dreipolig oder mehrpolig) der Generatorbaugruppe bereitgestellt werden kann. Die elektrische Leistung kann somit von der Generatorbaugruppe abgegeben werden. Das Bestimmen der elektrischen Leistung kann zum Beispiel eine oder mehrere Messungen, insbesondere Messungen von Spannung und Strom der elektrischen Ausgabe der Generatorbaugruppe umfassen.

Die Abgaseigenschaft kann zum Beispiel eine thermodynamische Eigenschaft, eine physikalische und/oder chemische Eigenschaft des Abgases betreffen, welche aufgrund der Bedingungen während der Verbrennung beeinflusst bzw. gegeben ist.

Zum Bestimmen der Abgaseigenschaft (insbesondere physikalische/chemische oder thermodynamische Abgaseigenschaft) basierend auf der bestimmten elektrischen Leistung kann ein physikalisch/chemisches Modell herangezogen werden, welches zum Beispiel durch (thermodynamische) Gleichungen beschrieben sein kann.

Zum Beispiel kann das Verhalten des in die Generatorbaugruppe zugeführten Abgases modelliert werden. Auch kann eine Funktion der Generatorbaugruppe, insbesondere des Generators innerhalb der Generatorbaugruppe modelliert werden. Zur Modellierung können physikalische/chemische Gesetze bzw. Zusammenhänge herangezogen werden.

Die elektrische Leistung kann durch Simulation oder Modulierung oder aufgrund von Messung bestimmt werden. Die elektrische Leistung der Generatorbaugruppe kann sehr schnell (mit geringer Messträgheit) bestimmt werden. Damit können Temperaturschwankungen, zum Beispiel eines Abgases schnell nachverfolgt werden und so eine Steuerung der Verbrennungskraftmaschine verbessert werden.

Zum Bestimmen der Abgaseigenschaft basierend auf der bestimmten elektrischen Leistung können ferner thermodynamische Wirkungsgrade (zum Beispiel Reibung innerhalb der Zuführung des Abgases betreffend, einen strömungstechnischen Wirkungsgrad betreffend, eine Generatoreffizienz betreffend) herangezogen werden.

Die Zuführung (zum Beispiel Zuführungsrohr oder Abgasrohrabschnitt) und die Generatorbaugruppe können zum Beispiel als eine Strömungsmaschine angesehen werden. Es kann davon ausgegangen werden, dass der elektrische Beitrag zur Leistung (elektrische Leistung) der Strömungsmaschine bekannt ist (zum Beispiel aufgrund von Messung von Strom und Spannung). Mit Hilfe der Wirkungsgrade (z.B. einfache Modelle für die Reibung der Strömungsmaschinenwelle) und des Wirkungsgrades der eMaschine (insbesondere des Generators der Generatorbaugruppe) kann je nach Anwendungsszenario eine thermodynamische Größe (als ein Beispiel einer Abgaseigenschaft) in einer unmittelbaren Umgebung (vor bzw. hinter bzw. innerhalb) der Strömungsmaschine bzw. der Generatorbaugruppe ermittelt werden.

Dadurch, dass die elektrischen Größen schnell im Vergleich zu thermodynamischen Größen (insbesondere Temperatur) bestimmt (insbesondere gemessen) werden können und damit ohne nennenswerten Zeitverzug zur Verfügung stehen, kann sich ein Vorteil im Vergleich zur sensorischen Erfassung von thermodynamischen Größen ergeben.

Zum Beispiel kann eine Abgastemperatur vor oder hinter der Generatorbaugruppe bzw. Strömungsmaschine, ein Abgasdruck vor oder hinter der Generatorbaugruppe bzw. Strömungsmaschine, oder ein Massenstrom des Abgases durch die Generatorbaugruppe bzw. die Strömungsmaschine basierend auf der bestimmten elektrischen Leistung bestimmt werden. Eine Bestimmung anderer Abgaseigenschaften bzw. thermodynamischer Größen ist ebenfalls möglich.

Das Verfahren kann ferner ein Bestimmen einer anderen Abgaseigenschaft aufweisen, wobei das Bestimmen der Abgaseigenschaft ferner basierend auf der anderen Abgaseigenschaft erfolgt. Die andere Abgaseigenschaft (zum Beispiel eine physikalische/chemische bzw. thermodynamische Eigenschaft) kann zum Beispiel modelliert bzw. simuliert oder auch gemessen werden. Zum Beispiel kann die eine Abgaseigenschaft eine Temperatur sein, während die andere Abgaseigenschaft einen Druck (insbesondere vor und/oder hinter der Generatorbaugruppe) umfasst. Je nach Bedürfnissen bzw. der Bestimmbarkeit (bzw. dem zur Bestimmung erforderlichen Aufwand) können die Rollen der einen Abgaseigenschaft und der anderen Abgaseigenschaft wechseln bzw. tauschen.

Das Bestimmen der Abgaseigenschaft basierend auf der bestimmten elektrischen Leistung und ferner basierend auf der anderen Abgaseigenschaft kann zum Beispiel aufgrund eines in einer mathematischen Gleichung darstellbaren Zusammenhangs erfolgen, welche insbesondere thermodynamische Größen enthält. Durch Umstellen der mathematischen Gleichung kann alternativ die andere Abgaseigenschaft basierend auf der einen Abgaseigenschaft und ferner basierend auf der elektrischen Leistung bestimmt werden.

Die Abgaseigenschaft und/oder die andere Abgaseigenschaft kann eine Abgaseigenschaft vor Eintritt in die Generatorbaugruppe (bzw. Strömungsmaschine), eine Abgaseigenschaft nach Austritt aus der Generatorbaugruppe (bzw. Strömungsmaschine) und/oder eine Abgaseigenschaft innerhalb der Generatorbaugruppe (bzw. Strömungsmaschine) betreffen. Die andere Abgaseigenschaft kann zum Beispiel durch Messung vor Eintritt in, innerhalb der bzw. nach Austritt aus der Generatorbaugruppe gemessen werden. Insbesondere kann zum Beispiel ein Abgasdruck vor bzw. hinter der Generatorbaugruppe in schneller und kostengünstiger Weise gemessen werden. Dazu können übliche Sensoren verwendet werden. Damit können Kosten und ein Ausrüstungsaufwand vermindert werden.

Die Abgaseigenschaft und/oder die andere Abgaseigenschaft kann zum Beispiel eine Temperatur und/oder einen Druck vor Eintritt in die, innerhalb der oder nach Austritt aus der Generatorbaugruppe betreffen. Damit können für eine Motorsteuerung relevante Größen bestimmt werden.

Die Abgaseigenschaft und/oder die andere Abgaseigenschaft kann ferner einen Massenstrom des Abgases durch die Generatorbaugruppe betreffen. Der Massenstrom kann durch Simulation oder durch Messung bestimmt werden.

Das Bestimmen der elektrischen Leistung der Generatorbaugruppe kann ein Messen eines von der Generatorbaugruppe (z.B. an Ausgangsanschlüssen) bereitgestellten Stroms und/oder einer Spannung umfassen. Strom und Spannung können in kostengünstiger Weise und in rascher Weise gemessen werden, insbesondere durch Messeinrichtungen, welche in herkömmlichen Generatorbaugruppen bzw. Fahrzeugen mit Generatorbaugruppen vorhanden ist. Damit können ein Ausrüstungsaufwand und Kosten reduziert werden.

Die Generatorbaugruppe bzw. die Elektromaschine kann eine eTurbine, einen eBooster (auch elektrischer Verdichter genannt) und/oder einen elektrisch unterstützten Turbolader umfassen. Eine eTurbine kann ausgebildet sein, einen Teil der Enthalpie des Abgases in mechanische Energie und dann in elektrische Energie zu wandeln. Eine eTurbine kann dazu zum Beispiel einen mechanischen Turbinenteil mit Schaufeln, die auf einer Turbinenwelle angebracht sind, umfassen. Das Abgas kann auf die Schaufeln auftreffen und dadurch die Turbinenwellen in Drehung versetzen. Die eTurbine kann ferner einen Generatorteil umfassen, welcher einen Rotor aufweist, welcher mit der Turbinenwelle gekoppelt ist. Der Generatorrotor kann eine oder mehrere Magnetfelderzeugungseinrichtungen, zum Beispiel Permanentmagnete aufweisen. Der Generatorteil der eTurbine kann ferner einen Stator aufweisen, welcher Leiter umfasst, wobei bei Rotation des Generatorrotors relativ zu dem Stator in dem Leiter Spannungen induziert werden. Im Generatorteil kann die Rotationsenergie in elektrische Energie umgewandelt werden.

Stromabwärts der Generatorbaugruppe kann ferner ein Abgasturbolader vorgesehen sein und/oder eine Abgasnachbehandlungsvorrichtung, wie etwa ein Katalysator oder Abgasfilter, z.B. Dieselpartikelfilter.

Der eBooster kann einen Elektromotor umfassen, welcher Gas (z.B. Frischluft oder ein Luft-Abgas-Gemisch) verdichten kann. Der eBooster kann in einem elektromotorischen Modus und/oder in einem Generatormodus betrieben werden. Der elektrisch unterstützte Turbolader kann ebenfalls zu einer weiteren Verdichtung des Gases führen, welches dann der Verbrennungskraftmaschine zugeführt wird. Damit können verschiedene Motorkonstruktionskonzepte unterstützt werden.

Falls ein elektrisch unterstützter Turbolader in der Generatorbaugruppe umfasst ist, kann bzw. muss dann der vom Verdichter abgegebene Leistungsanteil zusätzlich modelliert werden bzw. berücksichtigt werden. Die Turbine kann auch elektromotorisch angetrieben sein. Auch kann die Generatorbaugruppe einen elektrischen Verdichter umfassen. Die elektrischen Größen der Generatorbaugruppe müssen nicht zwingend durch Zusatzmesstechnik bestimmt werden. Es ist möglich, dass die elektrischen Größen (Strom, Spannung, Leistung) aus beispielsweise internen Sensoren von einer Steuereinheit der elektrischen Strömungsmaschine bzw. der Generatorbaugruppe bereitgestellt werden.

Bei einer inversen Problemstellung können zum Beispiel auch mit Hilfe von (bestimmten, insbesondere gemessenen) thermodynamischen Größen bzw. Abgaseigenschaften die elektrischen Größen der Generatorbaugruppe modelliert bzw. bestimmt werden. Dabei entfällt jedoch ein Vorteil einer schnelleren Ermittlung der thermodynamischen Größen bzw. Abgaseigenschaften.

Gemäß einem weiteren Aspekt der vorliegenden Erfindung ist ein Verfahren zum Steuern einer Verbrennungskraftmaschine bereitgestellt, wobei das Verfahren aufweist:

- Durchführen des Verfahrens zum Bestimmen einer Gaseigenschaft eines Gases, insbesondere einer Abgaseigenschaft eines Abgases, der Verbrennungskraftmaschine gemäß einer der vorangehend beschriebenen Ausführungsformen; und

- Steuern der Verbrennungskraftmaschine basierend auf mindestens einer der bestimmten Gaseigenschaft, insbesondere Abgaseigenschaft.

Das Verfahren kann ebenfalls von einem Motorsteuergerät bzw. einem Modul (wie etwa Softwaremodul oder Hardwaremodul) eines Motorsteuergeräts ausgeführt werden. Wenn zum Beispiel die bestimmte Abgaseigenschaft eine Abgastemperatur betrifft bzw. umfasst, kann basierend auf der bestimmten Gaseigenschaft bzw. Abgaseigenschaft, zum Beispiel Druck, Temperatur und/oder Massenstrom des die Strömungsmaschine der Elektromaschine durchströmenden Gasgemisches eine Menge von Kraftstoff und/oder eine Menge von Luft bzw. Sauerstoff, welche der Verbrennungskraftmaschine zugeführt werden sollte, bestimmt werden.

Gemäß einem noch weiteren Aspekt der vorliegenden Erfindung ist ein Motorsteuergerät bereitgestellt, welches ausgebildet ist, ein Verfahren gemäß einer der vorangehend beschriebenen Ausführungsformen auszuführen.

Gemäß einem weiteren Aspekt der vorliegenden Erfindung ist ferner ein Fahrzeug, insbesondere Hybridfahrzeug, bereitgestellt, welches das Motorsteuergerät, die Verbrennungskraftmaschine, sowie die Generatorbaugruppe umfasst, wobei das Motorsteuergerät die Abgaseigenschaft des Abgases der Verbrennungskraftmaschine basierend auf einer elektrischen Leistung der Generatorbaugruppe bestimmt und ausgebildet ist, die Verbrennungskraftmaschine basierend auf der bestimmten Abgaseigenschaft zu steuern.

Ausführungsformen der vorliegenden Erfindung können eine schnelle und ggf. auch genauere Erfassung von thermodynamischen Größen eines Abgases und damit kann ein verbessertes Regelungsverhalten des Verbrennungsmotors ermöglichen, welcher das Abgas abgibt, und/oder es kann der Applikationsaufwand verringert werden. Insbesondere kann zusätzlich teure Sensorik eingespart werden.

Ausführungsformen der vorliegenden Erfindung werden nun mit Bezug auf die beiliegende Zeichnung erläutert. Die Erfindung ist nicht auf die beschriebenen oder illustrierten Ausführungsformen beschränkt.

Die Figur 1      illustriert in schematischer Darstellung einen Teil 1 eines Fahrzeuges gemäß einer Ausführungsform der vorliegenden Erfindung, welches ein Motorsteuergerät 3 gemäß einer Ausführungsform der vorliegenden Erfindung umfasst, welches ausgebildet ist, ein Verfahren zum Bestimmen einer Abgaseigenschaft eines Abgases einer Verbrennungskraftmaschine 5 durchzuführen bzw. basierend darauf die Verbrennungskraftmaschine 5 zu steuern; und

Figur 2      zeigt schematisch ein erfindungsgemäßes Verfahren.

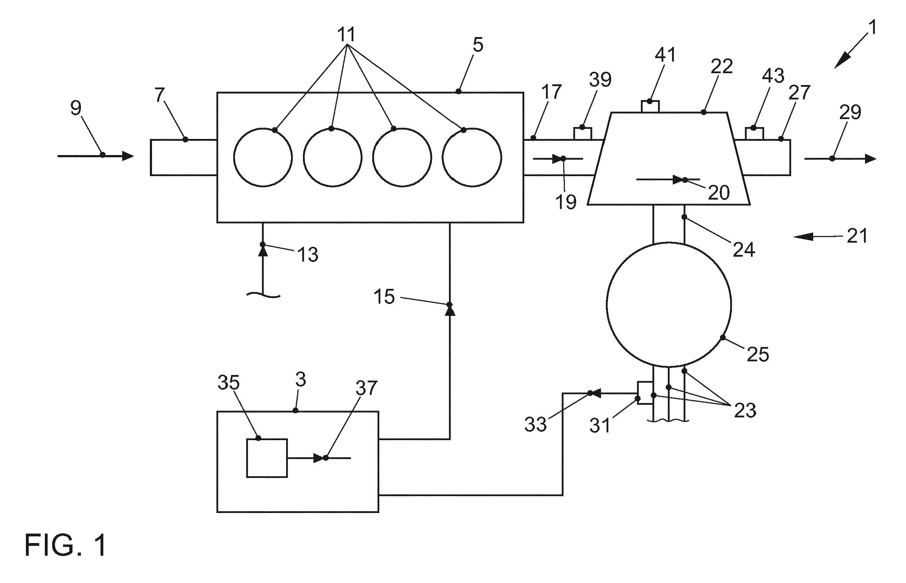

Der in Fig. 1 schematisch dargestellte Teil 1 eines Fahrzeug weist zum Antrieb eine Verbrennungskraftmaschine 5 auf, welcher über ein Ansaugrohr 7 bzw. Laderohr 7 ein Gas (z.B. Frischluft oder ein Gemisch auf Frischluft und Abgas) 9 (z.B. vorkomprimiert oder nicht vorkomprimiert) zugeführt wird. Vor dem Zuführen des Gases 9 über das Laderohr 7 kann zum Beispiel stromaufwärts eine Drosselklappe, ein Verdichter, eine Abgasrückführung (zum Beispiel Niederdruck- oder Hochdruck-AGR) vorgesehen sein.

Die Verbrennungskraftmaschine 5 umfasst mehrere Zylinder 11, die ferner einen (nicht dargestellten) Kolben aufweisen, um jeweils einen Verbrennungsraum bereitzustellen, in welchem eine Verbrennung von Kraftstoff 13 (Reaktion eines Gemisches aus Gas 9 und Kraftstoff 13) erfolgt, welcher ebenfalls der Verbrennungskraftmaschine 5 zugeführt wird.

Zur Steuerung der Verbrennungskraftmaschine 5 gibt das Motorsteuergerät 3 Steuersignale 15 zur Regelung der Kraftstoffzufuhr und/oder Luftzufuhr sowie auch zur Steuerung von Einlass- und Auslassventilen an die Verbrennungskraftmaschine 5 aus, wie im weiteren Detail unten beschrieben wird.

Über ein Abgasrohr 17 wird nach der Verbrennung entstehendes Abgas 19 aus der Verbrennungskraftmaschine 5 herausgeleitet und einer Generatorbaugruppe 21 zugeführt. Optional können zwischen Verbrennungskraftmaschine-Auslass und Generatorbaugruppe 21 andere Komponenten liegen (z.B. Turbine, Abgasnachbehandlung, etc). Im illustrierten Ausführungsbeispiel handelt es sich bei der Generatorbaugruppe um eine eTurbine. Die eTurbine 21 umfasst einen Turbinenabschnitt bzw. Strömungsmaschine 22 mit Schaufeln, welche mit einer Turbinenwelle 24 verbunden sind, welche durch den Abgasstrom 19 in Rotation versetzt wird. Ferner umfasst die eTurbine 21 einen Generatorabschnitt 25, in welchem die mechanische Rotationsenergie der Turbinenwelle 24 in elektrische Energie umgewandelt wird. Die erzeugte elektrische Energie ist an Ausgangsanschlüssen 23 der Generatorbaugruppe 21 abgreifbar. Die elektrische Energie (zum Beispiel dreiphasig oder zweiphasig) kann zum Beispiel (insbesondere über einen zwischengeschalteten Gleichrichter, Wechselrichter bzw. Umrichter) einem Verbraucher oder einer Batterie des Fahrzeugteilss 1 zugeführt werden.

Das von der Verbrennungskraftmaschine 5 abgegebene Abgas 19 strömt durch die Strömungsmaschine 22 der Generatorbaugruppe 21 hindurch, versetzt die Turbinenwelle 24 in Rotation, und verlässt die Generatorbaugruppe 21 nach Durchströmen der Generatorbaugruppe 21 in dem weiteren Abgasrohr 27, welches nachfolgend das Abgas 29 zum Beispiel einem Abgasturbolader und/oder einer Abgasnachbehandlung zuführen kann. Aufgrund der Energieabgabe des Abgases 19 innerhalb der Generatorbaugruppe 21 hat das aus der Generatorbaugruppe 21 austretende Abgas 29 eine geringere Energie bzw. einen geringeren Energiegehalt (zum Beispiel Temperatur und/oder Druck und/oder Geschwindigkeit) als das in die Generatorbaugruppe 21 eingeführte Abgas 19.

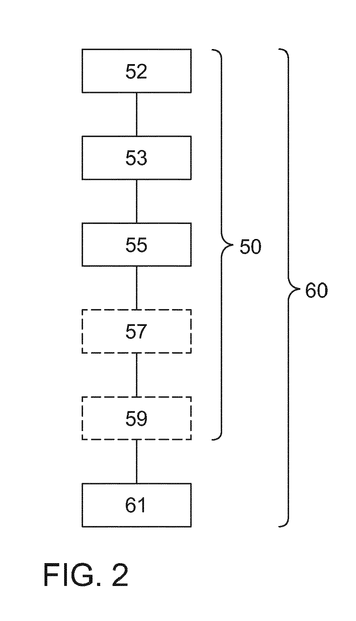

Das Fahrzeug 1 (insbesondere das Motorsteuergerät 3) ist ausgebildet, ein in Figur 2 schematisch illustriertes Verfahren 50 zum Bestimmen einer Abgaseigenschaft des Abgases 19 bzw. 29 bzw. 20 (Abgas innerhalb der Generatorbaugruppe 21) durchzuführen.

Dabei werden in dem Verfahren 50 folgende Schritte durchgeführt, die insbesondere in der Reihenfolge von oben nach unten durchgeführt werden können:

In Schritt 52 erfolgt ein Zuführen des Abgases 19 in eine Generatorbaugruppe 21.
In Schritt 53 erfolgt ein Bestimmen einer elektrischen Leistung ($P_{elektr}$) der Generatorbaugruppe 21.
In Schritt 55 erfolgt ein Bestimmen der Abgaseigenschaft 37 basierend auf der bestimmten elektrischen Leistung ($P_{elektr}$).

Optional kann das Verfahren 50 auch die folgenden Schritte aufweisen, die in Figur 2 als gestrichelte Kästen dargestellt sind (Nicht alle Verfahrensschritte müssen in der in Figur 2 dargestellten Reihenfolge durchgeführt werden):

In Schritt 57 erfolgt ein Bestimmen einer anderen Abgaseigenschaft (p),

wobei das Bestimmen der Abgaseigenschaft 37 ferner basierend auf der anderen Abgaseigenschaft (p) erfolgt. Dabei kann die andere Abgaseigenschaft (p) gemessen und/oder modelliert werden. Die Abgaseigenschaft und/oder die andere Abgaseigenschaft kann eine Abgaseigenschaft (z.B. Druck, Temperatur, Massenstrom) vor Eintritt in die Generatorbaugruppe 21, eine Abgaseigenschaft nach Austritt aus der Generatorbaugruppe 21 und/oder eine Abgaseigenschaft innerhalb der Generatorbaugruppe 21 betreffen.

Das Bestimmen der elektrischen Leistung ($P_{elektr}$) der Generatorbaugruppe (21) gemäß Schritt 53 kann ein Messen eines von der Generatorbaugruppe 21 bereitgestellten Stroms I und/oder einer Spannung U gemäß Schritt 59 umfassen.

Ferner ist das Fahrzeug 1 (insbesondere das Motorsteuergerät 3) ausgebildet, ein in Figur 2 schematisch illustriertes Verfahren 60 zum Steuern einer Verbrennungskraftmaschine 5 durchzuführen. Dabei weist das Verfahren 60 die Schritte auf:

Durchführen des Verfahrens 50 zum Bestimmen einer Abgaseigenschaft 37 eines Abgases (19, 20, 29) der Verbrennungskraftmaschine 5; und
bei Schritt 61 Steuern (z.B. unter Verwendung der Signale 15) der Verbrennungskraftmaschine 5 basierend auf mindestens einer der bestimmten Abgaseigenschaft 37.

Während des Verfahrens 50 wird das Abgas 19 der Generatorbaugruppe 21 zugeführt. Ferner wird die elektrische Leistung der Generatorbaugruppe 21 zum Beispiel durch Messen mittels der Messeinrichtung 31 von Strom und Spannung an den Ausgangsanschlüssen 23 der Generatorbaugruppe 21 bestimmt. Die bestimmten Messwerte 33 (zum Beispiel Strom und Spannung separat bzw. elektrische Leistung) werden dem Motorsteuergerät 3 übermittelt. Das Motorsteuergerät 3 umfasst ein Modul (zum Beispiel Softwaremodul oder Hardwaremodul) 35, welches basierend auf der bestimmten elektrischen Leistung (zum Beispiel in dem Messsignal 33 kodiert) eine Abgaseigenschaft 37 des Abgases 19, 20 bzw. 29, das heißt vor der, innerhalb der oder hinter der Generatorbaugruppe 21 bestimmt. Basierend auf der bestimmten Abgaseigenschaft 37 erzeugt das Motorsteuergerät 3 ferner das Steuersignal 15, welches die Verbrennungskraftmaschine 5 steuert, zum Beispiel hinsichtlich einer Kraftstoffzufuhr und/oder einer Luftzufuhr oder auch hinsichtlich eines Öffnens und Schließens von Aus- bzw. Einlassventilen.

Zum Beispiel kann eine elektrische Energie $P_{elektr}$ durch gemessene Spannung und Strom bestimmt werden, wonach eine mechanische Leistung $P_{Welle}$ der Welle der Generatoreinrichtung 21 ($P_{Welle}$) wie folgt bestimmt werden kann:

$$P_{elektr} = U * I$$

$$P_{Welle} = P_{elektr} / \eta_{eMaschine} / \eta_{Welle}$$

Ferner kann mittels Sensoren 39, 41 und/oder 43 zum Beispiel ein Druck des Abgases vor der Generatoreinrichtung 21 und auch hinter der Generatoreinrichtung 21 gemessen werden. Die Messsensoren 39, 41, 43 können alternativ oder zusätzlich auch zur Messung anderer Abgaseigenschaften, wie etwa Temperatur oder Massenstrom ausgebildet sein.

Die Abgastemperatur des Abgases 19 vor Erreichen bzw. Durchströmen der Generatorbaugruppe 21 kann zum Beispiel (von Modul 35) gemäß der folgenden Formel bestimmt werden.

$$T_{vor\_eTurbine} = \frac{P_{Welle}/\eta_{Turbine}}{m_{Turbine}c_p} \Big/ \left(1 - \left[p_{nach\_eTurbine}/p_{vor\_eTurbine}\right]^{\frac{\kappa-1}{\kappa}}\right)$$

Dabei sind folgende Abkürzungen benutzt:

$m_{Turbine} \rightarrow$ Massenstrom durch die eTurbine
$P_{therm} \rightarrow$ thermodynamische Turbinenleistung
$P_{elektr} \rightarrow$ elektrische eTurbinenleistung
$\eta_{eMaschine} \rightarrow$ elektromechanische eMaschinenwirkungsgrad $\eta_{Turbine} \rightarrow$ thermodynamischer Turbinenwirkungsgrad
$\eta_{Welle} \rightarrow$ mechanischer Wirkungsgrad der eTurbinen-Welle $U \rightarrow$ elektrische Spannung
$I \rightarrow$ elektrischer Strom

$p_{vor\_eTurbine}$ -> Druck des Abgases vor der eTurbine
$p_{nach\_eTurbine}$ -> Druck des Abgases hinter der eTurbine

Hierbei repräsentiert $c_p$ die spezifische Wärmekapazität des Abgases bei konstantem Druck, bezeichnet $\kappa$ den Quotienten aus der spezifischen Wärmekapazität $c_P$ (gemessen z.B. in kJ/(kg · K)) bei kontantem Druck des Abgases und der spezifischen Wärmekapazität cv bei kontantem Volumen des Abgases. Die oben stehende Gleichung kann zum Beispiel durch thermodynamische Grundgleichungen, die zum Beispiel aus Zusammenhängen zwischen Temperatur und Druck bei adiabatischer Kompression bzw. Expansion berücksichtigen, abgeleitet werden, wobei Wirkungsgrade berücksichtigt werden.

Der mechanische Wirkungsgrad der eTurbinen-Welle ($\eta_{Welle}$) kann zum Beispiel die Effizienz definieren, mit welcher ein Teil der thermodynamische Energie (Enthalpie) des Abgases 19 in mechanische Rotationsenergie der Welle umgewandelt wird. Der thermodynamische Turbinenwirkungsgrad ($\eta_{Turbine}$) kann zum Beispiel einen strömungstechnischen Wirkungsgrad definieren. Der elektromechanische eMaschinenwirkungsgrad ($\eta_{eMaschine}$) kann zum Beispiel die Effizienz der Umwandlung der Rotationsenergie des Rotors in elektrische Energie definieren.

Gemäß einer Ausführungsform der vorliegenden Erfindung wird somit der Abgasdruck des Abgases 19 und 29 vor und hinter der sowie der Massenstrom des Abgases durch die Generatorbaugruppe 21 bestimmt (insbesondere gemessen) und basierend darauf und basierend auf der elektrischen Leistung der Generatorbaugruppe 21 die Temperatur des Abgases 19 vor Eintritt in die Generatorbaugruppe 21 bestimmt.

Dabei kann eine Messung sowohl der elektrischen Leistung als auch der Drücke des Abgases und des Massenstroms in schneller Weise erfolgen, um die Abgastemperatur nach Austritt aus der Verbrennungsmaschine 5 und vor Eintritt in die Generatorbaugruppe 21 schnell und zuverlässig bestimmen zu können. Mit Hilfe der bestimmten Abgastemperatur kann dann die Motorsteuerung 3 geeignete Steuersignale 15 zur Steuerung der Verbrennungsmaschine 5 an diese übermitteln.

Gemäß einer weiteren Ausführungsform der vorliegenden Erfindung wird die Temperatur $T_{vor\_eTurbine}$ gemäß der folgenden Gleichung bestimmt:

$$T_{vor\_eTurbine} = \frac{P_{Welle}}{m_{Turbine}c_p} + T_{nach\_eTurbine}$$

Hierbei kann zum Beispiel die Temperatur $T_{nach\_eTurbine}$ mittels des Sensors 43 gemessen werden.

Alternativ kann zum Beispiel durch Umstellen einer der obigen Gleichungen der Druck des Abgases vor bzw. hinter der Generatorbaugruppe 21 bestimmt werden, wenn zum Beispiel die Temperatur vor der Generatorbaugruppe 21 auf andere Weise bestimmt bzw. gemessen wurde.

Temperatur und Druck sind mögliche Varianten einer Abgaseigenschaft bzw. einer anderen Abgaseigenschaft des Abgases.

**Bezugzeichenliste**

| | |
|---|---|
| 1 | Teil eines Fahrzeugs |
| 3 | Motorsteuerung |
| 5 | Verbrennungskraftmaschine |
| 7 | Laderohr |
| 9 | Frischluft oder Frischluft-Abgasgemisch |
| 11 | Zylinder |
| 13 | Kraftstoff |
| 15 | Steuersignale |
| 17 | Abgasrohr |
| 19 | Abgas vor Generatorbaugruppe |
| 20 | Abgas in Generatorbaugruppe |
| 21 | Generatorbaugruppe |
| 22 | Turbine |
| 23 | Ausgangsanschlüsse |
| 24 | Turbinenwelle |
| 25 | Elektromotor |
| 27 | weiteres Abgasrohr |
| 29 | Abgas nach Generatorbaugruppe |
| 31 | elektrischer Messfühler |
| 33 | Messsignale |
| 35 | Motorsteuergerätmodul |
| 37 | Abgaseigenschaft repräsentierendes Signal |
| 39, 41, 43 | Messfühler für Druck bzw. Temperatur bzw. Massenstrom |
| 50 | Verfahren zum Bestimmen einer Abgaseigenschaft |
| 52,53,55,57,59 | Verfahrensschritte |
| 60 | Verfahren zum Steuern einer Verbrennungskraftmaschine |
| 61 | Verfahrensschritt |
| T | Temperatur |
| p | Druck |

**Patentansprüche**

1. Verfahren zum Bestimmen einer Gaseigenschaft (37) eines Gases (19,20,29) einer Verbrennungskraftmaschine (5), wobei das Verfahren aufweist:

   Zuführen des Gases (19) in eine Elektromaschine (21);
   Bestimmen einer elektrischen Leistung ($P_{elektr}$) der Elektromaschine (21); und
   Bestimmen der Gaseigenschaft (T, 37) basierend auf der bestimmten elektrischen Leistung ($P_{elektr}$).

2. Verfahren gemäß Anspruch 1, welches zum Bestimmen einer Abgaseigenschaft (37) eines Abgases (19,20,29) der Verbrennungskraftmaschine (5) ausgebildet ist, wobei die Elektromaschine eine Generatorbaugruppe aufweist, wobei das Verfahren aufweist:

   Zuführen des Abgases (19) in die Generatorbaugruppe (21);
   Bestimmen einer elektrischen Leistung ($P_{elektr}$) der Generatorbaugruppe (21); und
   Bestimmen der Abgaseigenschaft (T, 37) basierend auf der bestimmten elektrischen Leistung ($P_{elektr}$).

3. Verfahren gemäß Anspruch 2, ferner aufweisend:

   Bestimmen einer anderen Abgaseigenschaft (p),

   wobei das Bestimmen der Abgaseigenschaft (T, 37) ferner basierend auf der anderen Abgaseigenschaft (p) erfolgt, wobei die andere Abgaseigenschaft (p) gemessen und/oder modelliert wird.

4.  Verfahren gemäß dem vorangehenden Anspruch, wobei die Abgaseigenschaft und/oder die andere Abgaseigenschaft eine Abgaseigenschaft vor Eintritt in die Generatorbaugruppe (21), eine Abgaseigenschaft nach Austritt aus der Generatorbaugruppe (21) und/oder eine Abgaseigenschaft innerhalb der Generatorbaugruppe (21) betrifft.

5.  Verfahren gemäß einem der vorangehenden Ansprüche 3 oder 4, wobei die Abgaseigenschaft (37) und/oder die andere Abgaseigenschaft (p) eine Temperatur (T) und/oder einen Druck (p) vor Eintritt in die, innerhalb der oder nach Austritt aus der Generatorbaugruppe (21) betrifft.

6.  Verfahren gemäß einem der vorangehenden Ansprüche 3 bis 5, wobei die Abgaseigenschaft (37) und/oder die andere Abgaseigenschaft einen Massenstrom des Abgases (20) durch die Generatorbaugruppe (21) betrifft.

7.  Verfahren gemäß einem der vorangehenden Ansprüche 2 bis 6, wobei das Bestimmen der elektrischen Leistung (Pelektr) der Generatorbaugruppe (21) ein Messen eines von der Generatorbaugruppe (21) bereitgestellten Stroms (I) und/oder einer Spannung (U) umfasst.

8.  Verfahren gemäß einem der vorangehenden Ansprüche 2 bis 7, wobei die Generatorbaugruppe (21) eine eTurbine, einen eBooster, und/oder einen elektrisch unterstützten Turbolader umfasst.

9.  Verfahren zum Steuern einer Verbrennungskraftmaschine (5), wobei das Verfahren aufweist:

    Durchführen des Verfahrens zum Bestimmen einer Abgaseigenschaft (37) eines Abgases (19, 20, 29) der Verbrennungskraftmaschine (5) gemäß einem der vorangehenden Ansprüche 2 bis 8; und
    Steuern (15) der Verbrennungskraftmaschine (5) basierend auf mindestens einer der bestimmten Abgaseigenschaft (37).

10. Motorsteuergerät (3), welches ausgebildet ist, ein Verfahren gemäß einem der vorangehenden Ansprüche auszuführen.

FIG. 1

EP 3 115 569 A1

FIG. 2

**Europäisches Patentamt**
**European Patent Office**
**Office européen des brevets**

# EUROPÄISCHER RECHERCHENBERICHT

Nummer der Anmeldung

EP 16 17 6361

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 930 568 A1 (ABB RESEARCH LTD [CH]) 11. Juni 2008 (2008-06-11) * Absätze [0004], [0014] - [0017], [0024], [0025] * * Ansprüche 1,2 * * Abbildungen 1,2 * ----- | 1-10 | INV. F01N9/00 F01N5/04 F02D41/14 F02B39/10 F02D41/00 |
| A | FR 2 821 890 A1 (VOLKSWAGEN AG [DE]) 13. September 2002 (2002-09-13) * Ansprüche 1-13 * * Abbildung 2 * ----- | 1-10 | |
| A | US 2011/154821 A1 (EVANS-BEAUCHAMP LINCOLN [US]) 30. Juni 2011 (2011-06-30) * Ansprüche 8-10 * * Abbildungen 1-3 * ----- | 1-10 | |
| A | EP 2 615 283 A1 (FORD GLOBAL TECH LLC [US]) 17. Juli 2013 (2013-07-17) * Ansprüche 1,2 * * Abbildungen 1,2 * ----- | 1-10 | RECHERCHIERTE SACHGEBIETE (IPC) |
| A | US 2007/186539 A1 (DOLLMEYER THOMAS A [US] ET AL) 16. August 2007 (2007-08-16) * Ansprüche 1,2 * ----- | 1-10 | F01N F02B F02D |

Der vorliegende Recherchenbericht wurde für alle Patentansprüche erstellt

| Recherchenort | Abschlußdatum der Recherche | Prüfer |
|---|---|---|
| München | 23. November 2016 | Ikas, Gerhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 16 17 6361

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-11-2016

| Im Recherchenbericht angeführtes Patentdokument | Datum der Veröffentlichung | Mitglied(er) der Patentfamilie | Datum der Veröffentlichung |
|---|---|---|---|
| EP 1930568 A1 | 11-06-2008 | AT 474133 T<br>CN 101595288 A<br>EP 1930568 A1<br>ES 2347345 T3<br>US 2009281737 A1<br>WO 2008068330 A1 | 15-07-2010<br>02-12-2009<br>11-06-2008<br>28-10-2010<br>12-11-2009<br>12-06-2008 |
| FR 2821890 A1 | 13-09-2002 | DE 10111775 A1<br>FR 2821890 A1 | 02-10-2002<br>13-09-2002 |
| US 2011154821 A1 | 30-06-2011 | KEINE | |
| EP 2615283 A1 | 17-07-2013 | CN 103195592 A<br>EP 2615283 A1<br>US 2013174547 A1 | 10-07-2013<br>17-07-2013<br>11-07-2013 |
| US 2007186539 A1 | 16-08-2007 | CN 101680380 A<br>DE 112007000409 T5<br>GB 2448250 A<br>US 2007186539 A1<br>WO 2007097944 A2 | 24-03-2010<br>11-12-2008<br>08-10-2008<br>16-08-2007<br>30-08-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070151240 A1